# EUROPEAN PATENT APPLICATION

(11) **EP 4 523 878 A1**
(43) Date of publication of application: **19.03.2025**
(21) Application number: 24198709.8
(22) Date of filing: 05.09.2024
(51) Int. Cl.: B29C 33/00, B29C 43/36, B65D 6/18, B65D 6/00

(54) **A TOOL AND A METHOD FOR COMPRESSION MOLDING**

(30) Priority: 15.09.2023 FI 20236031
(71) Applicant: Wimao Oy, 54190 Konnunsuo (FI)
(72) Inventor: NIEMI, Topi, 54190 Lappeenranta (FI); OLKKONEN, Veikko, 54190 Lappeenranta (FI)
(74) Representative: Väänänen, Janne Kalervo

(57) **Abstract**

A compression molding tool comprises a cavity member (101), a core member (102), and a compression system (103) for moving the core member towards the cavity member from a first position to a second position where the cavity and core members define a shape of an element produced by compression molding. The cavity member comprises a first projection (105) having a first side surface (106), and the core member comprises a second projection (107) having a second side surface (108) parallel to the first side surface. The first and second side surfaces are against or near each other when the core member is in the second position. Thus, a through hole, or a thin wall that can be punctured to form a through hole, is formed between cavities formed by the first and second projections in the element produced by compression molding.

## Description

### Technical field

The disclosure relates generally to compression molding. More particularly, the disclosure relates to a compression molding tool and a method for implementing a hole perpendicular to a compression direction in an element made by compression molding. Furthermore, the disclosure relates to an element made by compression molding.

### Background

Compression molding is a method of molding where molding material, typically preheated, is first placed in an open mold cavity. Then, the mold is closed with a core member, pressure is applied to force the molding material into contact with all mold surfaces, while heat and pressure are maintained until the molding material has cured. The molding material may be loaded into the mold cavity either in the form of pellets, a single piece of material, or a sheet, or the mold cavity may be loaded from an extruder, or the mold cavity can be filled by several pieces of preheated material or pre-products. The compression molding is a high-volume, highpressure method suitable for molding for example complex and high-strength fiberglass reinforcements. For other examples, advanced composite thermoplastics can also be compression molded with reinforcement structures such as unidirectional tapes, woven fabrics, randomly oriented fiber mat, or chopped strands. The advantage of compression molding is its ability to mold large and/or quite complex elements. Also, it is one of the lowest cost molding methods compared with other molding methods such as transfer molding and injection molding. Furthermore, the compression molding wastes relatively little material, this giving an advantage when working with expensive molding materials.

The compression molding is however not free from challenges. One of the challenges is that the compression molding imposes inherent limitations to shapes of elements made by compression molding. For example, it is challenging to implement a through hole that is perpendicular to a compression direction in an element made by compression molding. Thus, it can be challenging to make for example hinge elements in which there are through holes for a hinge pin.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments.

In this document, the word "geometric" when used as a prefix means a geometric concept that is not necessarily a part of any physical object. The geometric concept can be for example a geometric point, a straight or curved geometric line, a planar or non-planar geometric surface, a geometric space, or any other geometric entity that is zero, one, two, or three dimensional.

In accordance with the invention, there is provided a new compression molding tool. A compression molding tool according to the invention comprises:
- a cavity member comprising a cavity surface,
- a core member, also called a plug member, comprising a core surface, and
- a compression system configured to move the core member in a compression direction towards the cavity member from a first position with respect to the cavity member to a second position with respect to the cavity member, the cavity surface and the core surface being configured to define a shape of an element produced by compression molding when the core member is in the second position with respect to the cavity member,

The cavity surface comprises a first projection having a first side surface and the core surface comprises a second projection having a second side surface parallel to the first side surface such that the first and second side surfaces are non-overlapping with each other when the core member is in the first position and when seen along a first direction perpendicular to the compression direction. The first and second side surfaces are facing towards each other and at least partially overlapping with each other when the core member is in the second position and when seen along the first direction. A distance between the first and second side surfaces is zero or at least smaller than a distance from the first projection to a portion of the core surface outside the second projection and smaller than a distance from the second projection to a portion of the cavity surface outside the first projection, when the core member is in the second position.

Thus, a through hole substantially perpendicular to the compression direction, or a thin wall that can be easily punctured to form a through hole, is formed between cavities formed by the first and second projections in the element produced by compression molding. The thickness of the wall can be for example at most 1.5 mm.

In accordance with the invention, there is also provided a new element made by compression molding with a compression molding tool according to the invention. The element comprises a first recession on a first side of the element and formed by the first projection of the compression molding tool, a second recession on a second side of the element opposite to the first side of the element and formed by the second projection of the compression molding tool and i) a through hole between the first and second recessions in a direction perpendicular to depth directions of the first and second recessions or ii) a wall between the first and second recessions such that a thickness of the wall is at most 1.5 mm.

In accordance with the invention, there is also provided a new method for producing an element by compression molding. The method comprises:
- placing material of the element between a cavity member and a core member of a compression molding tool according to the invention,
- pressing the core member in a compression direction towards the cavity member from a first position with respect to the cavity member to a second position with respect to the cavity member, and
- moving the core member away from the cavity member and removing the element from the compression molding tool after the material of the element has stiffened.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of figures

Exemplifying and non-limiting embodiments and their advantages are explained in greater detail below in the sense of examples and with reference to the accompanying drawings, in which:
figures 1a, 1b, 1c, and 1d illustrate a compression molding tool according to an exemplifying and non-limiting embodiment,
figures 1e, 1f, and 1g illustrate an element made by compression molding with the compression molding tool illustrated in figures 1a, 1b, 1c, and 1d,
figures 2a and 2b illustrate a compression molding tool according to an exemplifying and non-limiting embodiment,
figures 3a and 3b illustrate a compression molding tool according to an exemplifying and non-limiting embodiment,
figures 4a and 4b show a part of an element made by compression molding with a compression molding tool according to an exemplifying and non-limiting embodiment,
figure 5 shows a product comprising elements made by compression molding with compression molding tools according to exemplifying and non-limiting embodiments, and
figure 6 shows a flowchart of a method according to an exemplifying and non-limiting embodiment for producing an element by compression molding.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

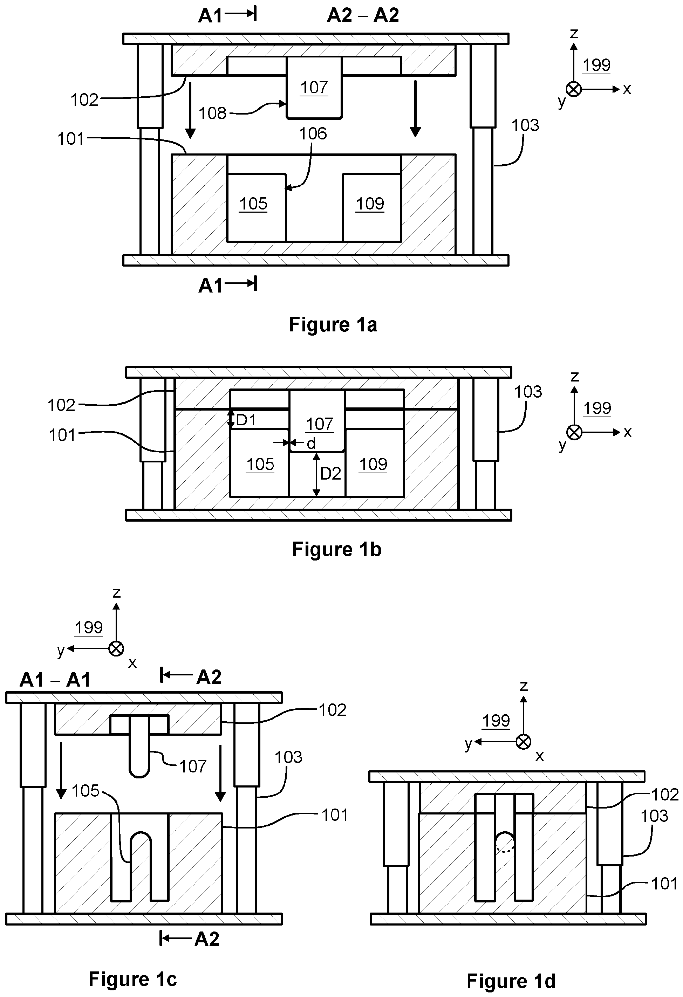

figure 1a shows a section view A2 - A2 of a compression molding tool according to an exemplifying and non-limiting embodiment. The section shown in figure 1a is taken along a geometric plane A2 - A2 shown in figure 1c so that the section plane is parallel with the xz-plane of a coordinate system 199. figure 1c shows a section view A1 - A1 of the compression molding tool. The section shown in figure 1c is taken along a geometric plane A1 - A1 shown in figure 1a so that the section plane is parallel with the yz-plane of the coordinate system 199. The compression molding tool comprises a cavity member 101 having a cavity surface and a core member 102 having a core surface. The compression molding tool comprises a compression system 103 configured to move the core member 102 in a compression direction towards the cavity member 101 from a first position with respect to the cavity member 101 to a second position with respect to the cavity member 101. The compression system 103 can be for example mechanical, hydraulic, electromechanical, or pneumatic. Figures 1a and 1c show a situation in which the core member 102 is in the above-mentioned first position with respect to the cavity member 101, and figures 1b and 1d show a situation in which the core member 102 is in the above-mentioned second position with respect to the cavity member 101.

The cavity surface and the core surface are configured to define a shape of an element to be produced by compression molding when the core member 102 is in the second position with respect to the cavity member 101. The element to be produced by compression molding is not shown in figures 1a-1d. In figures 1a-1d, the compression direction is the negative z-direction of the coordinate system 199.

The cavity surface of the cavity member 101 comprises a first projection 105 having a first side surface 106, and the core surface of the core member 102 comprises a second projection 107 having a second side surface 108 parallel to the first side surface 106. The first and second side surfaces 106 and 108 are non-overlapping with each other when the core member 102 is in the first position as shown in figures 1a and 1c and when seen along a first direction perpendicular to the compression direction and parallel with the x-axis of the coordinate system 199. The first and second side surfaces 106 and 108 are facing towards each other and partially overlapping with each other when the core member 102 is in the second position as shown in figures 1b and 1d and when seen along the first direction, i.e. along the x-direction of the coordinate system 199.

In the exemplifying compression molding tool illustrated in figures 1a-1d, the first and second side surfaces 106 and 108 are against each other when the core member 102 is in the second position as shown in figures 1b and 1d, i.e. a distance between the first and second side surfaces 106 and 108 is zero when the core member 102 is in the second position. Thus, a through hole substantially perpendicular to the compression direction is formed between cavities formed by the first and second projections 105 and 107 in an element produced by compression molding.

In the exemplifying compression molding tool illustrated in figures 1a-1d, a geometric normal of the first side surface 106 and of the second side surface 108 is perpendicular to the compression direction. In figures 1a-1d, the geometric normal is parallel with the x-axis of the coordinate system 199. Edges of the first and second projections 105 and 107 are advantageously beveled or rounded to make it easier to move the core member 102 from the first position shown in figures 1a and 1c to the second position shown in figures 1b and 1d.

In the exemplifying compression molding tool illustrated in figures 1a-1d, the first projection 105 is one of two projections 105 and 109 of the cavity member 101 so that the second projection 107 is partially between these two projections 105 and 109 when the core member 102 is in the second position shown in figures 1b and 1d. A through hole substantially perpendicular to the compression direction is formed between cavities formed by the projections 107 and 109 in an element produced by compression molding. It to be noted that different number of projections so that the projections are alternately in the cavity member and in the core member can be used for implementing a through hole in a desired direction perpendicular to the compression direction.

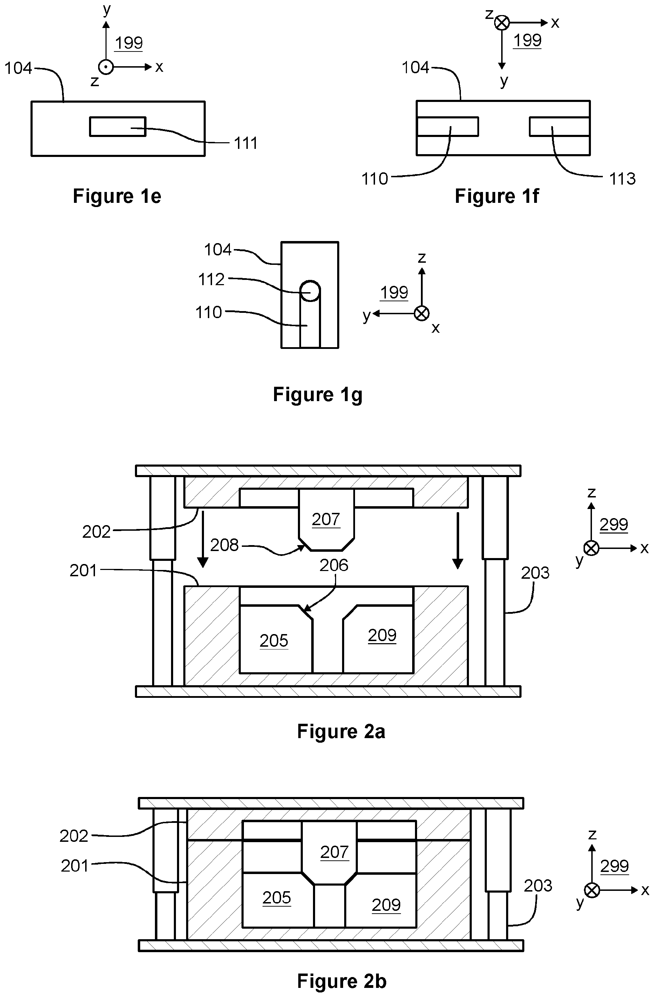

Figures 1e, 1f, and 1g illustrate an element 104 made by compression molding with a compression molding tool illustrated in figures 1a-1d. The material of the element 104 may comprise for example plastic. The element 104 comprises a first recession 110 on a first side of the element and formed by the first projection 105 of the compression molding tool. The element 104 comprises a second recession 111 on a second side of the element opposite to the first side of the element 104 and formed by the second projection 107 of the compression molding tool. As the first and second side surfaces 106 and 108 of the first and second projections 105 and 107 are against each other when the core member 102 is in the second position as shown in figures 1b and 1d, the element comprises a through hole 112 between the first and second recessions in a direction parallel with the x-axis of the coordinate system 199 and perpendicular to depth directions of the first and second recessions. The depth directions of the first and second recessions are parallel with the z-axis of the coordinate system 199. Furthermore, the element comprises a recession 113 formed by the projection 109 of the compression molding tool.

Figures 2a and 2b illustrate a compression molding tool according to an exemplifying and non-limiting embodiment. Figures 2a and 2b show section views where the geometric section plane is parallel with the xz-plane of a coordinate system 299. The compression molding tool comprises a cavity member 201 having a cavity surface and a core member 202 having a core surface. The compression molding tool comprises a compression system 203 configured to move the core member 202 in a compression direction towards the cavity member 201 from a first position with respect to the cavity member 201 to a second position with respect to the cavity member 201. Figure 2a shows a situation in which the core member 202 is in the above-mentioned first position with respect to the cavity member 201, and figure 2b shows a situation in which the core member 202 is in the above-mentioned second position with respect to the cavity member 201. The cavity surface and the core surface are configured to define a shape of an element to be produced by compression molding when the core member 202 is in the second position with respect to the cavity member 201. The element to be produced by compression molding is not shown in figures 2a and 2b. In figures 2a and 2b, the compression direction is the negative z-direction of the coordinate system 299.

The cavity surface of the cavity member 201 comprises a first projection 205 having a first side surface 206, and the core surface of the core member 202 comprises a second projection 207 having a second side surface 208 parallel to the first side surface 206. The first and second side surfaces 206 and 208 are non-overlapping with each other when the core member 202 is in the first position as shown in figure 2a and when seen along a first direction perpendicular to the compression direction and parallel with the x-axis of the coordinate system 299. The first and second side surfaces 206 and 208 are facing towards each other and overlapping with each other when the core member 202 is in the second position as shown in figure 2b and when seen along the first direction, i.e. along the x-direction of the coordinate system 299.

In the exemplifying compression molding tool illustrated in figures 2a and 2b, the first and second side surfaces 206 and 208 are against each other when the core member 202 is in the second position as shown in figure 2b, i.e. a distance between the first and second side surfaces 206 and 208 is zero when the core member 202 is in the second position. Thus, a through hole substantially perpendicular to the compression direction is formed between cavities formed by the first and second projections 205 and 207 in an element produced by compression molding. Furthermore, the cavity surface of the cavity member 201 comprises a projection 209 that works with the projection 207 in the same way as the projection 205 works with the projection 207.

In the exemplifying compression molding tool illustrated in figures 2a and 2b, the first and second side surfaces 206 and 208 are slanted relative to the compression direction, i.e. relative to the z-direction of the coordinate system 299. An advantage of the slanted first and second side surfaces 206 and 208 is that the position of the core member 202 does not need to be so accurate with respect to the cavity member 201 in the x-direction of the coordinate system 299 than in cases where the corresponding side surfaces of the projections are perpendicular to the x-axis of the coordinate system 299.

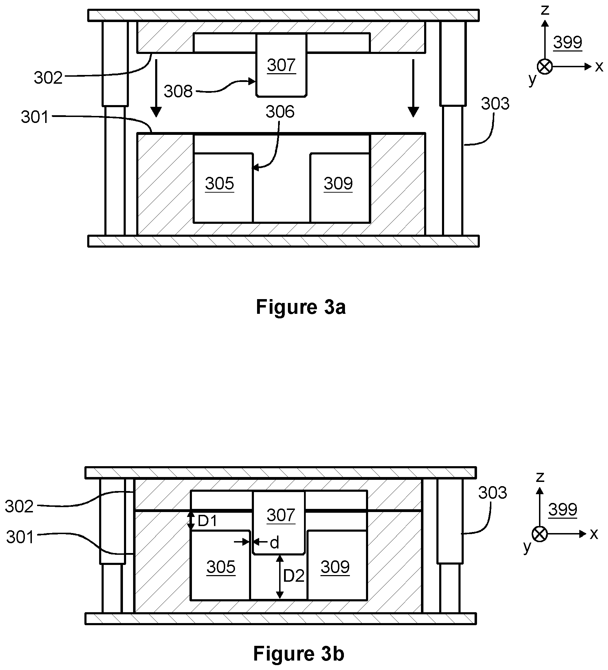

Figures 3a and 3b illustrate a compression molding tool according to an exemplifying and non-limiting embodiment. Figures 3a and 3b show section views where the geometric section plane is parallel with the xz-plane of a coordinate system 399. The compression molding tool comprises a cavity member 301 having a cavity surface and a core member 302 having a core surface. The compression molding tool comprises a compression system 303 configured to move the core member 302 in a compression direction towards the cavity member 301 from a first position with respect to the cavity member 301 to a second position with respect to the cavity member 301. Figure 3a shows a situation in which the core member 302 is in the above-mentioned first position with respect to the cavity member 301, and figure 3b shows a situation in which the core member 302 is in the above-mentioned second position with respect to the cavity member 301. The cavity surface and the core surface are configured to define a shape of an element to be produced by compression molding when the core member 302 is in the second position with respect to the cavity member 301. The element to be produced by compression molding is not shown in figures 3a and 3b. In figures 3a and 3b, the compression direction is the negative z-direction of the coordinate system 399.

The cavity surface of the cavity member 301 comprises a first projection 305 having a first side surface 306, and the core surface of the core member 302 comprises a second projection 307 having a second side surface 308 parallel to the first side surface 306. The first and second side surfaces 306 and 308 are non-overlapping with each other when the core member 302 is in the first position as shown in figure 3a and when seen along a first direction perpendicular to the compression direction and parallel with the x-axis of the coordinate system 399. The first and second side surfaces 306 and 308 are facing towards each other and overlapping with each other when the core member 302 is in the second position as shown in figure 3b and when seen along the first direction, i.e. along the x-direction of the coordinate system 399.

In the exemplifying compression molding tool illustrated in figures 3a and 3b, the first and second side surfaces 106 and 108 are a distance d away from each other when the core member 302 is in the second position as shown in figure 3b. The distance d can be e.g. at most 1 mm or at most 0.5 mm. Thus, a wall whose thickness is d and which can be punctured to form a through hole substantially perpendicular to the compression direction, i.e. substantially perpendicular to the z-direction of the coordinate system 399, is formed between cavities formed by the first and second projections 305 and 307 in an element produced by compression molding. Furthermore, the cavity surface of the cavity member 301 comprises a projection 309 that works with the projection 307 in the same way as the projection 305 works with the projection 307. Each wall to be punctured to implement a through hole is advantageously thinner than other structures of an element made by compression molding. Thus, the distance d is smaller than for example a distance D1 from the first projection 305 to a portion of the core surface outside the second projection 307 and smaller than for example a distance D2 from the second projection 307 to a portion of the cavity surface outside the first projection 305, when the core member 302 is in the second position shown in figure 3b.

An advantage of the non-zero distance d between the first and second side surfaces 306 and 308 is that the position of the core member 302 does not need to be so accurate with respect to the cavity member 301 in the x-direction of the coordinate system 299 than in cases where corresponding side surfaces parallel with the compression direction are in contact with each other when the core member is in a position corresponding to figure 3b.

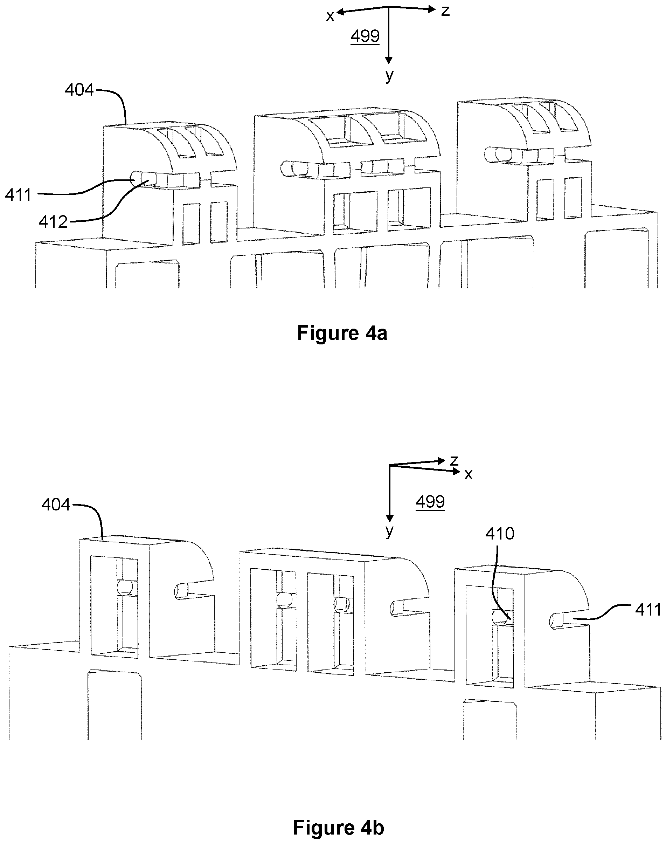

Figures 4a and 4b show a part of an element 404 made by compression molding with a compression molding tool according to an exemplifying and non-limiting embodiment. The viewing directions related to figures 4a and 4b are illustrated with the coordinate system 499. The element 404 comprises a first recession 410 on a first side of the element 404 and formed by a first projection of the compression molding tool, a second recession 411 on a second side of the element 404 opposite to the first side of the element 404 and formed by a second projection of the compression molding tool. The element 404 has a through hole 112 between the first and second recessions 410 and 411 in a direction perpendicular to depth directions of the first and second recessions 410 and 411. In figures 4a and 4b, the depth directions of the first and second recessions 410 and 411 are parallel with the z-axis of the coordinate system 299.

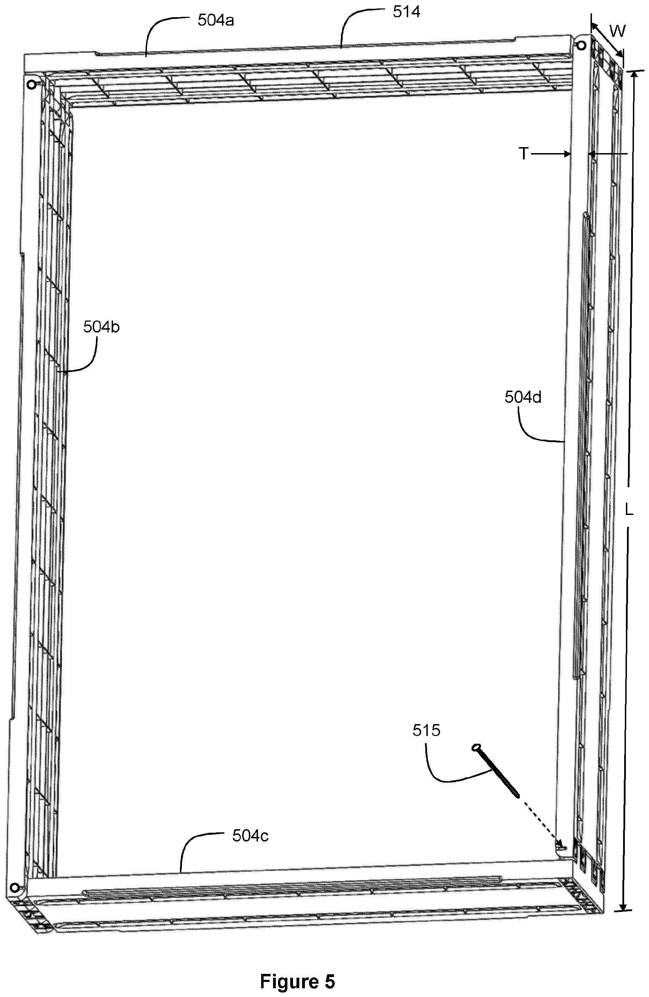

Figure 5 shows a product 514 comprising elongated elements 504a, 504b, 504c, and 504d each made by compression molding with a compression molding tool according to an exemplifying and non-limiting embodiment. In this exemplifying case, the product 514 is a pallet collar. Each of the elongated elements 504a-504d has a length L greater than a width W of the elongated element which is, in turn, greater than a thickness T of the elongated element. Each end of each of the elongated elements has a through hole between recessions on opposite sides of the elongated element, wherein depth directions of the recessions are in a thickness direction of the elongated element. The ends of the elongated elements are connected to each other with pins extending through the through holes of the elongated elements in a width direction of the elongated elements. In figure 5, one of the pins is denoted with a reference 515.

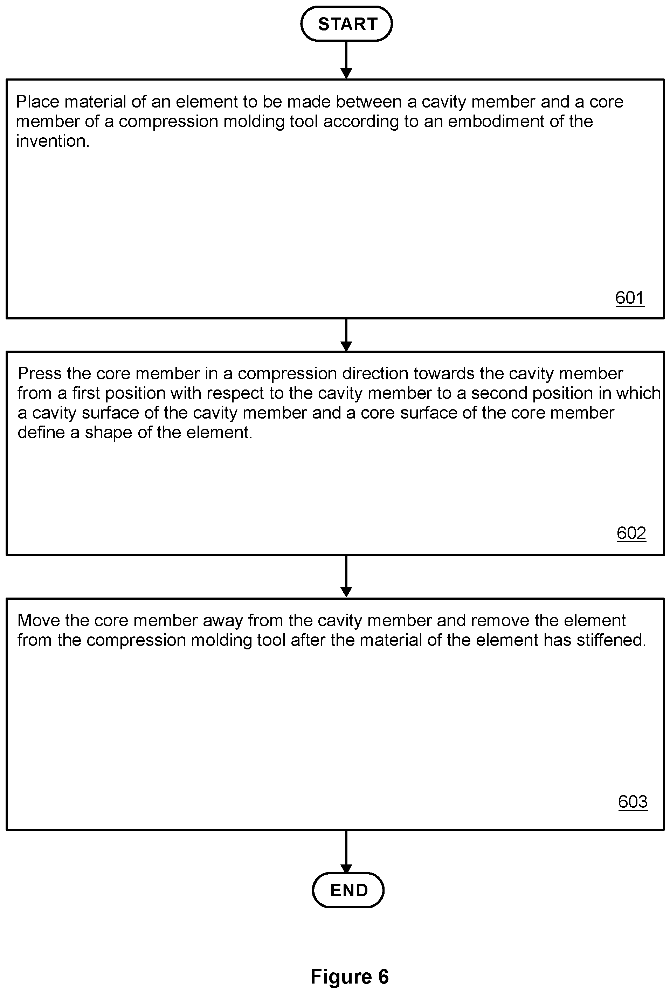

Figure 6 shows a flowchart of a method according to an exemplifying and non-limiting embodiment for producing an element by compression molding. The method comprises the following actions:
- action 601: placing material of the element between a cavity member and a core member of a compression molding tool according to an exemplifying and non-limiting embodiment of the invention,
- action 602: pressing the core member in a compression direction towards the cavity member from a first position with respect to the cavity member to a second position with respect to the cavity member, and
- action 603: moving the core member away from the cavity member and removing the element from the compression molding tool after the material of the element has stiffened,
wherein a cavity surface of the cavity member and a core surface of core member define a shape of the element when the core member is in the second position with respect to the cavity member.

The cavity surface comprises a first projection having a first side surface and the core surface comprises a second projection having a second side surface parallel to the first side surface such that the first and second side surfaces are non-overlapping with each other when the core member is in the first position and when seen along a first direction perpendicular to the compression direction, and the first and second side surfaces are facing towards each other and at least partially overlapping with each other when the core member is in the second position and when seen along the first direction. A distance between the first and second side surfaces is zero or at least smaller than a distance from the first projection to a portion of the core surface outside the second projection and smaller than a distance from the second projection to a portion of the cavity surface outside the first projection, when the core member is in the second position.

In a method according to an exemplifying and non-limiting embodiment, a geometric normal of the first side surface and of the second side surface is perpendicular to the compression direction. In a method according to another exemplifying and non-limiting embodiment, the first side surface and the second side surface are slanted relative to the compression direction.

In a method according to an exemplifying and non-limiting embodiment, the distance between the first and second side surfaces is at most 1 mm when the core member is in the second position.

In a method according to an exemplifying and non-limiting embodiment, the distance between the first and second side surfaces is at most 0.5 mm when the core member is in the second position.

In a method according to an exemplifying and non-limiting embodiment, the distance between the first and second side surfaces is zero, i.e. the first and second side surfaces are against each other, when the core member is in the second position.

In a method according to an exemplifying and non-limiting embodiment, one of the first and second projections is one of two projections so that the other one of the first and second projections is partially between the two projections when the core member is in the second position.

The specific examples provided in the description given above should not be construed as limiting the applicability and/or interpretation of the appended claims. It is to be noted that lists and groups of examples given in this document are non-exhaustive lists and groups unless otherwise explicitly stated.

## Claims

1. A compression molding tool comprising:
- a cavity member (101, 201) comprising a cavity surface,
- a core member (102, 202) comprising a core surface, and
- a compression system (103, 203) configured to move the core member in a compression direction (-z) towards the cavity member from a first position with respect to the cavity member to a second position with respect to the cavity member,
wherein the cavity surface and the core surface are configured to define a shape of an element (104) produced by compression molding when the core member is in the second position with respect to the cavity member, **characterized in that** the cavity surface comprises a first projection (105, 205) having a first side surface (106, 206) and the core surface comprises a second projection (107, 207) having a second side surface (108, 208) parallel to the first side surface such that the first and second side surfaces are non-overlapping with each other when the core member is in the first position and when seen along a first direction (x) perpendicular to the compression direction (-z), and the first and second side surfaces are facing towards each other and at least partially overlapping with each other when the core member is in the second position and when seen along the first direction (x), wherein a distance (d) between the first and second side surfaces is zero or at least smaller than a distance (D1) from the first projection to a portion of the core surface outside the second projection and smaller than a distance (D2) from the second projection to a portion of the cavity surface outside the first projection, when the core member is in the second position.

2. A compression molding tool according to claim 1, wherein a geometric normal of the first side surface (106) and of the second side surface (108) is perpendicular to the compression direction (-z).

3. A compression molding tool according to claim 1, wherein the first side surface (206) and the second side surface (208) are slanted relative to the compression direction (-z).

4. A compression molding tool according to any one of claims 1-3, wherein the distance (d) between the first and second side surfaces (306, 308) is at most 1 mm when the core member (302) is in the second position.

5. A compression molding tool according to claim 4, wherein the distance (d) between the first and second side surfaces (306, 308) is at most 0.5 mm when the core member (302) is in the second position.

6. A compression molding tool according to claim 5, wherein the distance between the first and second side surfaces (106, 108, 206, 208) is zero when the core member (102, 202) is in the second position.

7. A compression molding tool according to any one of claims 1-6, wherein one of the first and second projections (105) is one of two projections (105, 109) so that another one of the first and second projections (107) is partially between the two projections when the core member (102) is in the second position.

8. An element (104, 404, 504a-504d) made by compression molding with a compression molding tool according to any one of claims 1-7, **characterized in that** the element comprises a first recession (110, 410) on a first side of the element and formed by the first projection of the compression molding tool, a second recession (111, 411) on a second side of the element opposite to the first side of the element and formed by the second projection of the compression molding tool, and one of the following i) and ii):
- i) a through hole (112) between the first and second recessions in a direction (x) perpendicular to depth directions (+z, -z ) of the first and second recessions, or
- ii) a wall between the first and second recessions such that a thickness of the wall is at most 1.5 mm.

9. A product (514) comprising elongated elements (504a-504d) each being an element according to claim 8 and each having a length (L) greater than a width (W) of the elongated element greater than a thickness (T) of the elongated element, wherein each end of each of the elongated elements has a through hole between recessions on opposite sides of the elongated element, wherein depth directions of the recessions are in a thickness direction of the elongated element, and the ends of the elongated elements are connected to each other with pins (515) extending through the through holes of the elements in a width direction of the elongated elements.

10. A method for producing an element by compression molding, the method comprising:
- placing (601) material of the element between a cavity member and a core member of a compression molding tool,
- pressing (602) the core member in a compression direction (-z) towards the cavity member from a first position with respect to the cavity member to a second position with respect to the cavity member, and
- moving (603) the core member away from the cavity member and removing (603) the element from the compression molding tool after the material of the element has stiffened,
wherein a cavity surface of the cavity member and a core surface of core member define a shape of the element when the core member is in the second position with respect to the cavity member, **characterized in that** the cavity surface comprises a first projection (105, 205) having a first side surface (106, 206) and the core surface comprises a second projection (107, 207) having a second side surface (108, 208) parallel to the first side surface such that the first and second side surfaces are non-overlapping with each other when the core member is in the first position and when seen along a first direction (x) perpendicular to the compression direction (-z), and the first and second side surfaces are facing towards each other and at least partially overlapping with each other when the core member is in the second position and when seen along the first direction (x), wherein a distance (d) between the first and second side surfaces is zero or at least smaller than a distance (D1) from the first projection to a portion of the core surface outside the second projection and smaller than a distance (D2) from the second projection to a portion of the cavity surface outside the first projection, when the core member is in the second position.

11. A method according to claim 10, wherein a geometric normal of the first side surface (106) and of the second side surface (108) is perpendicular to the compression direction (-z).

12. A method according to claim 10, wherein the first side surface (206) and the second side surface (208) are slanted relative to the compression direction (-z).

13. A method according to one of claims 10-12, the distance (d) between the first and second side surfaces (306, 308) is at most 0.5 mm when the core member (302) is in the second position.

14. A method according to claim 13, wherein the distance (d) between the first and second side surfaces (106, 108, 206, 208) is zero when the core member (102, 202) is in the second position.

15. A method according to any one of claims 10-14, wherein one of the first and second projections (105) is one of two projections (105, 109) so that another one of the first and second projections (107) is partially between the two projections when the core member (102) is in the second position.
